# EUROPEAN PATENT SPECIFICATION

(11) **EP 2 602 538 B1**
(45) Date of publication and mention of the grant of the patent: **15.01.2020**
(21) Application number: 12194372.4
(22) Date of filing: 27.11.2012
(51) Int. Cl.: F21S 45/49, F21S 45/47, F21S 45/48, B60Q 1/00, B60Q 1/04, B62D 25/08

(54) **Lighting unit mounting for a vehicle**
Befestigung der Beleuchtungseinheit für ein Fahrzeug
Fixation d'unité d'éclairage pour véhicule

(30) Priority: 08.12.2011 GB 201121108
(43) Date of publication of application: 12.06.2013
(73) Proprietor: Nissan Motor Manufacturing (UK) Ltd., Cranfield Bedfordshire MK43 0DB (GB)
(72) Inventor: Hassan, Asim, Cranfield Bedfordshire MK430DB (GB)

(56) References cited:
- EP-A2- 1 462 308
- EP-A2- 1 762 432
- WO-A1-2004/055433
- DE-A1-102008 061 526
- DE-U1- 8 815 885
- FR-A1- 2 818 605
- JP-A- 2009 087 733
- US-A1- 2008 247 177

## Description

The present invention relates to a vehicle including a lighting unit, such as a headlamp; and a mounting frame for receiving the lighting unit.

Automotive headlamps provide low beam and high beam functions for a vehicle. Light Emitting Diode (LED) devices are now used as an alternative to traditional tungsten, halogen or xenon bulbs, to provide the light sources for these functions; and for other lights on the outside of the vehicle. Typically, the LED devices are arranged to provide white light when energised by an electrical power source. Using LEDs as a light source is desirable, since LEDs typically have a longer operating lifetime than halogen bulbs, and provide greater headlamp styling flexibility. However, LED devices tend to generate a significant amount of heat in use; which can have a detrimental effect on the operating performance of the LEDs, and on their longevity. In order to provide a stable and reliable light output throughout all operating conditions, such as varying ambient temperatures and electrical demands, LED devices are usually thermally connected to a heat sink so that the heat is conducted away from the devices. This ensures that the LED devices function within their normal operating parameters, and thus increases the operational lifetime of the LEDs.

Typically, the lighting unit includes a casing. The LED devices and the heat sink are located within the casing, to protect the lighting components from dust and moisture.

When designing a vehicle, there is often a tension between lighting engineers and vehicle structure engineers. The structure engineers are responsible for the integrity and performance of the structure of the vehicle. The lighting engineers are responsible for providing appropriate lighting devices, such as headlamps and brake lights; and will require openings to be formed in the structure of the vehicle in order to accommodate the lighting units. The openings can present challenges for the structure engineers, particularly when accommodating headlamps, since modern headlamps are relatively large. The structure has to be sufficiently strong to meet the necessary crash safety standards without using excessive additional reinforcing materials to accommodate the lights, since this adds unnecessary weight and thus reduces the efficiency of the vehicle.

An LED headlight unit is known from WO 2004/055,433A1. It comprises a heat sink attached to the rear face of a reflector unit and passing forward below the LED source to the front of the headlight unit. The heat sink then passes through the headlight casing and is attached to a rear face of a transverse body cross member, and also to a rear face of a frame surrounding the headlight lens; said frame being part of the headlight housing.

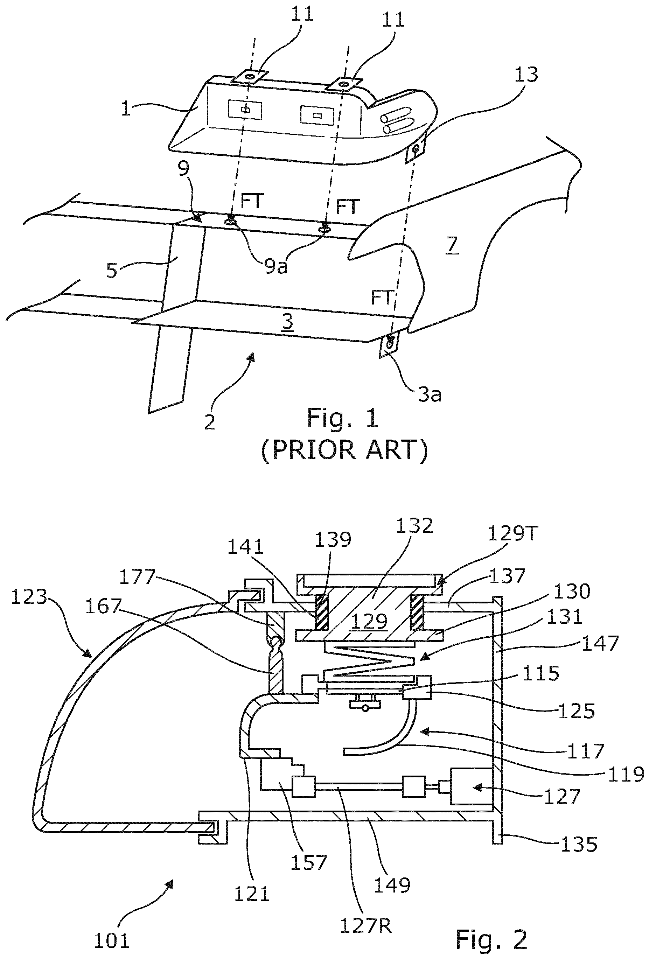

Figure 1 shows a typical LED headlamp 1 and a part of a vehicle structure that is designed to accommodate the headlamp 1. The structure provides a mounting frame 2 comprising a base 3 with a mounting hole 3a, side walls 5, 7, and an upper support 9 with mounting holes 9a. The headlamp 1 is inserted into the space defined by the base 3, side walls 5, 7 and upper support 9; and is bolted to the upper support 9 via upper brackets 11, and to the base 3 via lower brackets 13. (only an outer lower bracket 13 is visible in this view) The mounting frame 2 provides the required support for the lighting element, and meets the necessary structural requirements for the vehicle. Arrows FT illustrate the assembly process, by showing which brackets and holes mate together. It is clear from the Figure that the headlight shown will need to be slid backwards into the mounting frame 2. Side wall 7 is shown as the front part of the vehicle wing or fender.

This is a typical arrangement that is used in cars and vans. Similar arrangements can be used in lorries, buses and similar on-road and off-road vehicles, including railway vehicles. Similar structures can be found at the rear of some vehicles in order to accommodate rear facing lighting units. Railway vehicles often have white lights and red lights adjacent to each other, to facilitate reversible running.

When reviewing the prior art headlamp and its mounting structure, the inventor determined that the prior art arrangement can be improved upon; since in some respects, it is over engineered. Furthermore, the arrangement of the LEDs and the heat sink within the lighting unit is not optimised for heat dissipation, and therefore the performance and longevity of the lighting unit can be improved.

Accordingly, the present invention seeks to provide a vehicle comprising an improved LED lighting unit; and a mounting frame therefor. Solid state devices comprise both LEDs and LED devices, hence these terms will be used interchangeably throughout the description and claims.

According to one aspect of the invention there is provided a vehicle comprising a lighting unit and a mounting frame for receiving the lighting unit, wherein the lighting unit includes: a solid state lighting device; a heat sink thermally connected to the solid state lighting device such that at least some of the heat generated by the solid state lighting device is transferred to the heat sink by thermal conduction; and attachment means arranged to attach the heat sink to the vehicle; and wherein the heat sink attachment means are arranged to attach the heat sink to a plurality of mounting members that are part of the structure of the vehicle; characterized in that the mounting frame is open at its upper region, defining an open side in the mounting frame; and in that the heat sink is arranged to form a vehicle structural member in use, acting as a bridge, link, or strut between the plurality of mounting members; and closes the open side of the mounting frame.

The lighting unit is therefore attached to at least two parts of the vehicle structure via the heat sink, and links those parts together. Thus, the invention provides a new way of attaching the lighting unit to the vehicle.

The lighting unit comprises one of a headlamp and a rear lighting unit. The rear lighting unit includes at least one of a rear light, a reverse light and a braking light.

The mounting of the heat sink to a plurality of mounting members in the vehicle structure enables the heat sink's inherent strength and rigidity to be used as a vehicle structural member in place of the mounting member that would otherwise have been present. The heat sink replaces a vehicle mounting member; and therefore has the dual purpose of conducting heat away from the solid state lighting device, and maintaining the integrity of the structure of the vehicle in the region adjacent the lighting unit.

Advantageously, the attachment means can be arranged to releasably attach the heat sink to the vehicle mounting members. This enables the lighting unit to be easily removed from the vehicle if the lighting unit has to be repaired or replaced.

Advantageously, the attachment means includes at least two attachment formations formed in the heat sink that are each arranged to engage a respective mounting member. Advantageously, the heat sink can include a body having first and second ends, a first attachment formation located towards the first end of the body that is arranged to engage the first mounting member, and a second attachment formation located toward the second end of the body that is arranged to engage the second mounting member.

For example, each attachment formation can be in the form of a protruding formation such as a flange that protrudes from the body of the heat sink. At least one of a hole and a slot can be formed in each protruding formation. The slots and/or holes can be arranged to receive a screw, bolt, or pin. In some embodiments, the holes can be threaded.

The attachment means can include at least one threaded element. For example, the heat sink can be screwed or bolted to the vehicle mounting members. It will be appreciated by the skilled person that the heat sink can be connected to the mounting members in a number of ways. For example, the heat sink can be clamped to the mounting members. The heat sink and the mounting members can include mating formations. For example, the heat sink can include one of a male and a female attachment formation and the mounting member(s) can include the other of the male and the female attachment formation. For speed of assembly, the heat sink may be slid or clipped onto one mounting member, then bolted or screwed onto the other mounting member.

The lighting unit can include a casing to protect the lighting unit. The casing is arranged to house the solid state lighting device and at least some of the other lighting unit components.

Advantageously, at least part of the heat sink can be located outside of the casing. Advantageously, the part of the heat sink that includes the attachment formations is located outside of the casing for ease of attachment to the mounting members. Typically, at least part of the heat sink is located within the casing.

The casing can include an aperture; at least part of the heat sink may be arranged to protrude out of the casing through the aperture. Advantageously, the casing includes an upper wall and the aperture is formed in the upper wall; the arrangement being such that when the lighting unit is positioned in its normal operating orientation in the vehicle, the heat sink may protrude through an upper part of the lighting unit. The casing can include a base member, a rear wall, first and second side walls and an upper wall; and thereby provides an open-sided housing for the solid state lighting device. The open side of the casing is covered by a lens which allows light emitted from the solid state lighting device to exit the lighting unit; and may face forward on the vehicle for a headlight, or backwards on the vehicle for a tail light. The heat sink can have a longitudinal axis, and can be oriented such that the longitudinal axis is arranged transversely with respect to the casing and therefore to a vehicle when fitted thereto, with the first and second ends of the heat sink oriented towards the side walls of the casing.

The lighting unit can include a seal for sealing the heat sink to the casing adjacent the aperture. This prevents the ingress of dirt and moisture into the lighting unit.

Advantageously, the heat sink is thermally connected to the solid state lighting device by a thermally conductive flexible member. The flexible member provides a thermally conductive pathway between the heat sink and the solid state lighting device, which enables heat to be transferred from the solid state lighting device to the heat sink by conduction. The flexible member enables the orientation and/or position of the solid state lighting device to be adjusted with respect to the heat sink, while maintaining the thermally conductive pathway between them. Advantageously, the flexible member is made from a material having high thermal conductivity. The flexible member can be arranged in the form of a spring or a concertina member.

Advantageously, the heat sink can be positioned above the solid state lighting device; and preferably directly above the solid state lighting device, in the normal operating orientation of the lighting unit. This provides good heat dissipation. In this arrangement, the flexible member can be attached to a rear side of the solid state lighting device; and extends upwards to an underside of the heat sink.

Advantageously, the heat sink includes at least one formation, and preferably a plurality of formations, to improve the torsional stiffness of the heat sink. This enables the heat sink to better perform its role as a structural member of the vehicle. The heat sink can include a plurality of ribs that are arranged to increase the torsional stiffness. The ribs can be arranged parallel to a longitudinal axis of the heat sink and/or perpendicularly thereto, for example in the form of a lattice structure. Additionally, or alternatively, the ribs can be arranged inclined to the longitudinal axis of the heat sink.

The lighting unit can include an optical device for directing light emitted from the solid state lighting device out of the lighting unit. Advantageously, the optical device can include at least one of a reflector and a focussing device. Advantageously in some embodiments, the solid state lighting device can be oriented towards the reflector and the reflector can redirect the light to the focussing device. Advantageously, the solid state lighting device can be oriented to emit light downwardly towards the base of the casing. This orientation is preferred when the heat sink is positioned above the solid state lighting device.

Advantageously, the lighting unit can include means for adjusting the position and/or orientation of at least one of the solid state lighting device and the optical device. This enables the angle at which a beam of light exits the lighting unit to be adjusted. The adjustment means can include a motor and a mechanism for adjusting the position and/or orientation of at least one of the solid state lighting device and the optical device.

The solid state lighting device includes at least one LED, and preferably a plurality of LEDs.

Advantageously, the vehicle can include a mounting frame for receiving the lighting unit; said mounting frame including first and second mounting members; wherein the first mounting member is spaced apart from the second mounting member, and the heat sink is attached to the first and second mounting members. The first and second mounting members are members of the vehicle structure. The heat sink is arranged to structurally reinforce the mounting frame, and hence to reinforce the localised part of the vehicle structure adjacent to the lighting unit. At least a portion of the heat sink is located in the space between the first and second mounting members.

The first and second mounting members can comprise first and second side members of the mounting frame, when the vehicle is in its normal orientation. The heat sink may then be placed at the top of the lighting unit. The mounting frame may include mounting members on three sides of the lighting unit (the base, the first side member, and the second side member), with the heat sink performing the structural role of the replaced mounting member. For example, the mounting frame can be arranged in the form of a channel, such as a substantially U-shaped channel.

Advantageously, the first and second mounting members can include first and second attachment formations respectively, such as mounting tabs, for respectively engaging the first and second attachment formations on the heat sink. Each tab can include at least one of a hole, slot, bush, clip, or locating pin. The hole or bush may comprise a female thread, thereby forming a threaded element; the clip may be compatible with a self-tapping or coarse-threaded screw.

In embodiments where the lighting unit comprises a headlamp, the mounting frame is located at the front of the vehicle. In embodiments where the lighting unit comprises a rear lighting unit, the mounting frame is located at the rear of the vehicle. The lighting unit mounting frame is an integral part of the vehicle structure.

An embodiment of the invention will now be described, by way of example only, with reference to the drawings, in which:
Figure 1 shows diagrammatically a prior art LED headlamp for a vehicle, and a part of the vehicle to which it is attached;
Figure 2 shows diagrammatically a sectional view of a headlamp for a vehicle in accordance with the invention, along line F2-F2 in Figure 4;
Figure 3 shows diagrammatically a more detailed isometric view of a top part 129T of a heat sink included in the headlamp of Figure 2, which top part includes an arrangement of ribs to provide torsional stiffness;
Figure 4 shows diagrammatically an isometric view of the headlamp of Figure 2 and a part of the vehicle to which the headlamp is attached; and
Figure 5 shows diagrammatically an alternative pattern for a top part 129T of a heat sink included in the headlamp of Figure 2.

Figure 2 shows a diagrammatic sectional view of a headlamp 101 for a vehicle, such as a car, in accordance with the invention. The headlamp 101 includes a solid state lighting device in the form of an LED device 115, and an optical device 117 for directing light emitted from the LED device 115. The optical device 117 includes a reflector 119 and a focussing element 121. The LED device 115 is oriented such that light emitting from the device 115 is directed downwards onto the reflector 119, which in turn directs the light to the focussing device 121. The effect of the optical device 117 is to direct light emitted from the LED device 115 into a beam of light that is emitted out of the headlamp 101 through a lens 123.

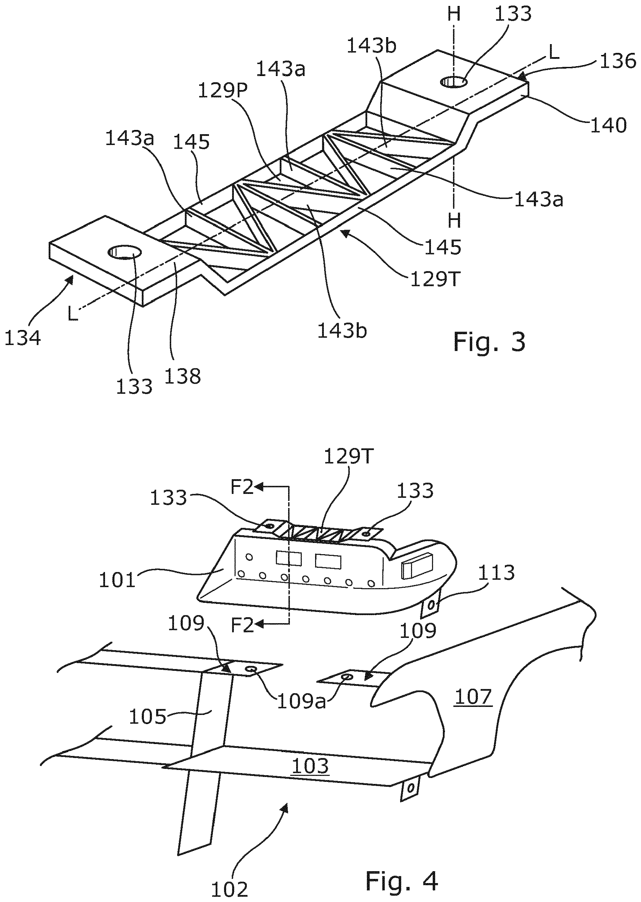

It will be appreciated that although only one LED device is shown in this Figure, two or more LED devices may be provided in each headlamp, for example to provide separate dipped and main beam light sources. (see Figure 4)

The LED device 115 and the optical device 117 are mounted on a movable support 125 that is arranged to pivot and/or move translationally, such that the angle at which the beam of light exits the headlamp 101 through the lens 123 can be adjusted. The position and/or orientation of the LED 115 and optical device 117 can be adjusted electromechanically, for example via a headlamp motor 127 attached to a back wall 147 of the headlight casing. A rod 127R extends forward from the motor to optical device 117 via a connector 157. The rod is driven forward or backward by motor 127 in order to pivot optical device 117 forwards or backwards as required, to align the headlamp beam upwards or downwards. Optical device 117 is pivoted around a joint comprising a ball 167 and a socket 177 (these parts being shown in section to clearly illustrate their construction). Hence, by actuating the motor 127, the driver is able to raise or lower the beam emitted from the headlamp 101 to compensate for vehicle loading and attitude. Alternatively, this adjustment may be performed automatically. Lateral and rotational adjustment mechanisms may also be included; as these are known from prior art, they will not be discussed further.

The headlamp 101 also includes a heat sink 129 that is mounted in thermal contact with the LED device 115 via a thermally conducting flexible element 131. The flexible element 131 is made from a material having high thermal conductivity, such as copper or aluminium. It has a structure that enables the position and/or orientation of the LED device 115 to be adjusted relative to the heat sink 129 without breaking the thermally conducting pathway between the LED device 115 and the heat sink 129. This allows the LED device 115 to adjust its position and/or orientation with respect to the heat sink 129 when the motor 127 is actuated. The flexible element 131 is preferably arranged in the form of a spring or bellows structure, and may have for example a helical or concertina structure. The heat sink 129 is positioned such that it is located above the LED device 115, when the headlamp 101 is in its normal orientation. Therefore heat is transferred from the LED device 115 to the heat sink 129 via convection as well as conduction. The flexible element 131 is attached to a rear side of the LED device 115, and is connected to an underside of the heat sink 129.

The heat sink 129 is made from a material having high thermal conductivity, such as aluminium or copper. The heat sink 129 ensures good performance of the LED device 115, and increases its operational life. Typically the heat sink 129 includes a core 130 and an arrangement of fins 132 extending outwards from the core 130. The fins 132 provide a large surface area over which air can flow to extract heat from the heat sink 129. Preferably the heat sink is elongate. The heat sink 129 additionally includes at least two attachment formations that enable the heat sink 129 to be attached to at least two vehicle structural members, such as parts of a headlamp mounting frame. For example, Figures 3 and 4 show a top section 129T of the heat sink 129 including through holes 133 located towards first and second ends 134,136 of the heat sink. The first and second ends 134,136 each include a stepped portion, which defines first and second flanges 138,140. The holes 133 are formed through the flanges 138,140 with their axes (for example, axis H-H through flange 140 in Figure 3) arranged substantially perpendicular to the longitudinal axis L-L of the heat sink 129. The holes 133 enable the heat sink 129 to be bolted, screwed or otherwise connected to the headlamp mounting frame (102, Fig. 4). Thus, headlamp 101 is attached to the headlamp mounting frame 102 via the heat sink 129. (It will be noted that axis L-L is not shown to pass through holes 133, as the axis is drawn through a plate section 129P of the heat sink bounded by ribs 145. Plate section 129P is vertically offset from first and second ends 134, 136, and therefore from holes 133.)

Returning to Figure 2, headlamp 101 includes a casing 135 for housing the operative components of the headlamp. The casing 135 includes first and second side walls (not shown), an upper wall 137, a base 149, and a rear wall 147. Thus the casing 135 provides a box-like structure with an open side. The lens 123 is connected to the casing 135 at its open side. The casing 135 can be made from any suitable material; and is preferably made from an opaque plastic material. The lens 123 is typically made from a transparent plastic material.

The upper wall 137 of the casing includes an aperture 139 formed through the wall. The aperture 139 is arranged to accommodate part of the heat sink 129. The arrangement is such that the heat sink 129 protrudes from the casing 135 so that it is partly located within the casing 135 and partly located outside of the casing 135, at an upper region thereof. The holes 133 and flanges (138,140, Fig. 3) that are arranged for attaching the heat sink 129 to the vehicle mounting frame are located outside of the casing 135.

A seal 141 seals the casing 135 with respect to the heat sink 129. The seal 141 prevents dust and moisture ingress into the headlamp 101.

The headlight mounting frame 102 is shown in Figure 4. The mounting frame includes a base 103, first and second side members 105, 107, and upper tabs 109 that protrude from the first and second side members 105, 107. Each tab 109 includes a through hole 109a. The tabs 109 are spaced apart so that the mounting frame is open at its upper region. This contrasts with the prior art arrangement of Figure 1, wherein the top structural member 9 forms a box with the side members 5, 7, and the base 3.

When the headlamp 101 is mounted to the vehicle in the mounting frame, the heat sink 129 is attached to the tabs 109 via bolts, screws or other attachment means (not shown). For example, bolts can be inserted through the holes 109a formed in the tabs 109 into the holes 133 formed in the heat sink. This enables the heat sink 129 to act as a structural member for the vehicle, since it closes the open side of the mounting frame. The invention uses the rigidity and strength of the heat sink 129 as a replacement for the upper support 9 used in the prior art arrangement (see Figure 1).

Thus, the vehicle requires one structural member less than is required in the prior art arrangement. The inventor has determined that this leads to a modest weight saving per headlamp with respect to the prior art arrangement; and also in a modest cost saving. When this is considered over the many millions of cars that are produced each year, together with the reduction of fuel required over the lifetime of each vehicle due to the reduction in weight, it will be apparent to a skilled person that the savings overall are significant.

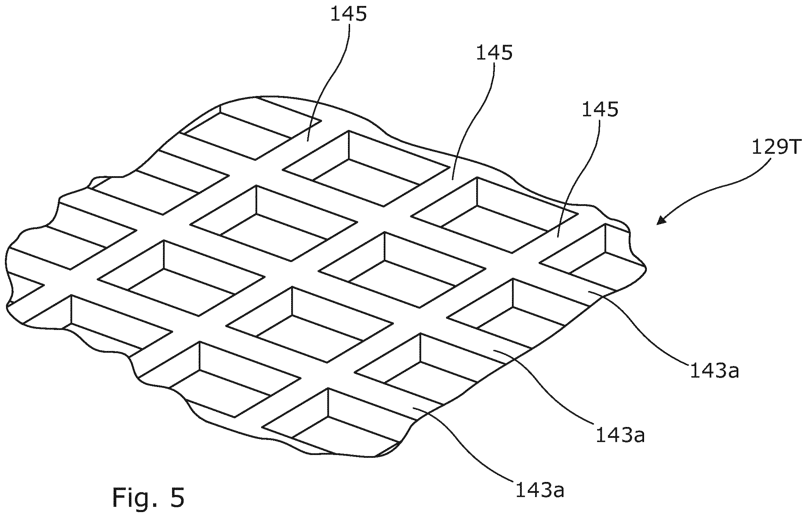

In order to better adapt the heat sink 129 for the purpose of being a structural member, the heat sink 129 can optionally include formations to increase its torsional stiffness; particularly on its top part 129T (Figs. 2 to 4), which acts as a beam when fitted into the vehicle. For example, the formations can be in the form of ribs (143a, Fig. 3) that extend transversely across the longitudinal axis L-L of the heat sink, ribs 143b that extend at an angle to axis L-L, and/or ribs 145 that are arranged substantially parallel with the longitudinal axis L-L of the heat sink. It will be appreciated by the skilled person that a large variety of formations can be used to increase the torsional stiffness of the heat sink 129. For example, a lattice structure similar to that shown in Figure 5 can be used.

It will be apparent to the skilled person that modifications can be made to the above embodiment that fall within the scope of the invention. For example, the heat sink can be attached to the mounting frame in a number of different ways. One of the tabs 109 and the heat sink 129 can include a press stud and the other of the tabs 109 and heat sink 129 can include a complementary formation. Connecting pins, slots, recesses and mating flanges, brackets and clamps can be used to attach the heat sink 129 to the vehicle additionally or alternatively to the bolts.

The heat sink 129 can comprise a cast component; and the attachment formations can be formed as part of the casting process. It is preferable to have the heat sink 129 releasably attachable to the headlamp mounting frame so that the headlamp 101 can be easily replaced in the event of any failure of, or damage to, the headlamp 101. One of the heat sink 129 and the tab 109 can include a male attachment formation; and the other of the heat sink 129 and the tab 109 can include a complementary female attachment formation.

In the Figures, the heat sink 129 is shown protruding from the casing 135 via the upper wall 137. It is preferable to have the heat sink 129 protruding from the upper wall 137 since this significantly aids the natural flow of heat from the LED device 115 to the environment. It also enables easy removal of the headlamp 101 from the headlamp mounting frame since the bolts, screws, and similar that are used to attach the heat sink to the headlamp mounting frame are easily accessible from above, for example when the bonnet (hood) is opened.

The invention has been described in connection with a car headlamp, however the invention is also applicable to lighting units for other parts of the car; for example, the rear lighting units. It is also envisaged that the invention will be applicable to other types of vehicles such as vans, buses, lorries, off-road machinery such as excavators, and railway vehicles.

In the Figures, the heat sink 129 is directly attached to the headlamp mounting frame. It will be appreciated by the skilled person that the heat sink can be attached to the headlamp mounting frame indirectly via an intermediate component, such as a washer or a bracket.

## Claims

1. A vehicle comprising a lighting unit (101) and a mounting frame (102) for receiving the lighting unit, wherein said lighting unit includes:
a solid state lighting device (115);
a heat sink (129) thermally connected to the solid state lighting device (115) such that at least some of the heat generated by the solid state lighting device is transferred to the heat sink by thermal conduction;
and attachment means (133, 138, 140) arranged to attach the heat sink (129) to the vehicle;
and wherein the heat sink attachment means (133, 138, 140) are arranged to attach the heat sink (129) to a plurality of mounting members (109) that are part of the structure of the vehicle;
**characterized in that**:
the mounting frame (102) is open at its upper region, defining an open side in the mounting frame (102);
and **in that** the heat sink (129) is arranged to form a vehicle structural member in use, acting as a bridge, link, or strut between the plurality of mounting members (109); and closes the open side of the mounting frame (102).

2. A vehicle according to claim 1, wherein the heat sink (129) includes a body (129T) having first and second ends (138, 140), a first attachment formation (133) located towards the first end (138) of the body (129T) that is arranged to engage a first mounting member (109), and a second attachment formation (133) located toward the second end (140) of the body (129T) that is arranged to engage a second mounting member (109).

3. A vehicle according to claim 1 or claim 2, wherein the lighting unit (101) includes a casing (135), and at least part of the heat sink (129) is located outside of the casing.

4. A vehicle according to claim 3, wherein the casing (135) includes an aperture (139), and at least part of the heat sink (129) is arranged to protrude out of the casing (135) through the aperture (139).

5. A vehicle according to claim 4, wherein the casing (135) includes an upper wall (137) and the aperture (139) is formed in the upper wall, the arrangement being such that when the lighting unit (101) is positioned in its normal operating orientation in the vehicle, the heat sink (129) protrudes through an upper part of the lighting unit (101).

6. A vehicle according to claim 4 or claim 5, including a seal (141) for sealing the heat sink (129) to the casing (135) adjacent the aperture (139).

7. A vehicle according to any one of the preceding claims, wherein the heat sink (129) is thermally connected to the solid state lighting device (115) by a thermally conducting flexible member (131).

8. A vehicle according to any one of the preceding claims, wherein the heat sink (129) is positioned such that it is located above the solid state lighting device (115) when the lighting unit (101) is its normal operating orientation.

9. A vehicle according to any one of the preceding claims, wherein the heat sink (129) includes at least one formation (143a, 143b, 145) to improve the torsional stiffness of the heat sink.

10. A vehicle according to claim 9, wherein the heat sink (129) includes a plurality of ribs (143a, 143b, 145) that are arranged to increase the torsional stiffness.

11. A vehicle according to any one of the preceding claims, wherein the mounting frame (102) includes first and second mounting members (109), wherein the first mounting member is spaced apart from the second mounting member, and the heat sink (129) is attached to the first and second mounting members (109).

12. A vehicle according to claim 11, wherein the first and second mounting members (109) comprise first and second side members of the mounting frame (102) when the vehicle is in its normal orientation.

13. A vehicle according to claim 11 or claim 12, wherein the mounting frame (102) is arranged in the form of a channel.

## Patentansprüche

1. Fahrzeug, das eine Beleuchtungseinheit (101) und einen Befestigungsrahmen (102) zum Aufnehmen der Beleuchtungseinheit umfasst, wobei die Beleuchtungseinheit Folgendes aufweist:
eine Festkörperbeleuchtungsvorrichtung (115);
einen Kühlkörper (129), der thermisch mit der Festkörperbeleuchtungsvorrichtung (115) verbunden ist, so dass zumindest ein Teil der von der Festkörperbeleuchtungsvorrichtung erzeugten Wärme durch Wärmeleitung an den Kühlkörper übertragen wird;
und Befestigungsmittel (133, 138, 140) zum Befestigen des Kühlkörpers (129) am Fahrzeug;
wobei die Kühlkörperbefestigungsmittel (133, 138, 140) derart angeordnet sind, um den Kühlkörper (129) an mehrere Befestigungselemente (109) zu befestigen, die Teil der Struktur des Fahrzeugs sind;
**dadurch gekennzeichnet, dass**:
der Befestigungsrahmen (102) in seinem oberen Bereich offen ist und eine offene Seite in dem Befestigungsrahmen (102) definiert;
und dadurch, dass der Kühlkörper (129) angeordnet ist, um im Gebrauch ein Fahrzeugstrukturelement zu bilden, das als Brücke, Verbindung oder Strebe zwischen den mehreren Befestigungselementen (109) wirkt; und
die offene Seite des Befestigungsrahmens (102) schließt.

2. Fahrzeug nach Anspruch 1, wobei der Kühlkörper (129) Folgendes aufweist: einen Körper (129T) mit ersten und zweiten Enden (138, 140), eine erste Befestigungsanordnung (133), die gegenüber dem ersten Ende (138) des Körper (129T) positioniert ist, der angeordnet ist, um mit einem ersten Befestigungselement (109) in Eingriff zu kommen, und eine zweite Befestigungsanordnung (133), die in Richtung des zweiten Endes (140) des Körpers (129T) angeordnet ist, um mit einem zweiten Befestigungselement (109) in Eingriff zu kommen.

3. Fahrzeug nach Anspruch 1 oder Anspruch 2, wobei die Beleuchtungseinheit (101) ein Gehäuse (135) aufweist und zumindest ein Teil des Kühlkörpers (129) außerhalb des Gehäuses angeordnet ist.

4. Fahrzeug nach Anspruch 3, wobei das Gehäuse (135) eine Öffnung (139) aufweist, und zumindest ein Teil des Kühlkörpers (129) derart angeordnet ist, dass es aus dem Gehäuse (135) durch die Öffnung (139) herausragt.

5. Fahrzeug nach Anspruch 4, wobei das Gehäuse (135) eine obere Wand (137) aufweist und die Öffnung (139) in der oberen Wand ausgebildet ist, wobei die Anordnung derart ist, dass, wenn die Beleuchtungseinheit (101) in ihrer normalen Betriebsausrichtung im Fahrzeug angeordnet ist, der Kühlkörper (129) durch einen oberen Teil der Beleuchtungseinheit (101) herausragt.

6. Fahrzeug nach Anspruch 4 oder Anspruch 5, wobei es eine Dichtung (141) zum Abdichten des Kühlkörpers (129) an das Gehäuse (135) neben der Öffnung (139) aufweist.

7. Fahrzeug nach einem der vorhergehenden Ansprüche, wobei der Kühlkörper (129) thermisch an die Festkörperbeleuchtungsvorrichtung (115) durch ein wärmeleitendes flexibles Element (131) angeschlossen ist.

8. Fahrzeug nach einem der vorhergehenden Ansprüche, wobei der Kühlkörper (129) derart angeordnet ist, dass er oberhalb der Festkörperbeleuchtungsvorrichtung (115) positioniert ist, wenn die Beleuchtungseinheit (101) in ihrer normalen Betriebsausrichtung ist.

9. Fahrzeug nach einem der vorhergehenden Ansprüche, wobei der Kühlkörper (129) zumindest eine Formation (143a, 143b, 145) aufweist, um die Torsionssteifigkeit des Kühlkörpers zu verbessern.

10. Fahrzeug nach Anspruch 9, wobei der Kühlkörper (129) mehrere Rippen (143a, 143b, 145) aufweist, die angeordnet sind, um die Torsionssteifigkeit zu erhöhen.

11. Fahrzeug nach einem der vorhergehenden Ansprüche, wobei der Befestigungsrahmen (102) erste und zweite Befestigungselemente (109) aufweist, wobei das erste Befestigungselement von dem zweiten Befestigungselement beabstandet ist und der Kühlkörper (129) an dem ersten und dem zweiten Befestigungselement (109) angebracht ist.

12. Fahrzeug nach Anspruch 11, wobei das erste und das zweite Befestigungselement (109) ein erstes und ein zweites Seitenelement des Befestigungsrahmens (102) umfassen, wenn das Fahrzeug in seiner normalen Ausrichtung ist.

13. Fahrzeug nach Anspruch 11 oder Anspruch 12, wobei der Befestigungsrahmen (102) in der Form eines Kanals angeordnet ist.

## Revendications

1. Véhicule comprenant une unité d'éclairage (101) et un cadre de montage (102) destiné à recevoir l'unité d'éclairage, dans lequel ladite unité d'éclairage comprend :
un dispositif d'éclairage à semi-conducteurs (115) ;
un dissipateur de chaleur (129) relié thermiquement au dispositif d'éclairage à semi-conducteurs (115), de sorte qu'au moins une partie de la chaleur générée par le dispositif d'éclairage à semi-conducteurs soit transférée au dissipateur de chaleur par conduction thermique ;
et des moyens de fixation (133, 138, 140) agencés pour fixer le dissipateur de chaleur (129) au véhicule ;
et dans lequel les moyens de fixation de dissipateur de chaleur (133, 138, 140) sont agencés pour fixer le dissipateur de chaleur (129) à une pluralité d'éléments de montage (109) qui font partie de la structure du véhicule ;
**caractérisé en ce que** :
le cadre de montage (102) est ouvert dans sa région supérieure, définissant un côté ouvert dans le cadre de montage (102) ;
et **en ce que** le dissipateur de chaleur (129) est agencé pour former un élément structurel de véhicule lors de l'utilisation, servant de pont, de liaison ou de jambe de force entre la pluralité d'éléments de montage (109) ; et
ferme le côté ouvert du cadre de montage (102).

2. Véhicule selon la revendication 1, dans lequel le dissipateur de chaleur (129) comprend un corps (129T) comportant des première et seconde extrémités (138, 140), une première formation de fixation (133) se trouvant vers la première extrémité (138) du corps (129T) qui est agencée pour venir en prise avec un premier élément de montage (109), et une seconde formation de fixation (133) se trouvant vers la seconde extrémité (140) du corps (129T) qui est agencée pour venir en prise avec un second élément de montage (109).

3. Véhicule selon la revendication 1 ou 2, dans lequel l'unité d'éclairage (101) comprend un boîtier (135), et au moins une partie du dissipateur de chaleur (129) se trouve à l'extérieur du boîtier.

4. Véhicule selon la revendication 3, dans lequel le boîtier (135) comprend une ouverture (139), et au moins une partie du dissipateur de chaleur (129) est agencée pour faire saillie hors du boîtier (135) à travers l'ouverture (139).

5. Véhicule selon la revendication 4, dans lequel le boîtier (135) comprend une paroi supérieure (137) et l'ouverture (139) est formée dans la paroi supérieure, l'agencement étant tel que, lorsque l'unité d'éclairage (101) est positionnée dans son orientation de fonctionnement normale dans le véhicule, le dissipateur de chaleur (129) fait saillie à travers une partie supérieure de l'unité d'éclairage (101).

6. Véhicule selon la revendication 4 ou 5, comprenant un joint (141) destiné à sceller le dissipateur de chaleur (129) au boîtier (135) adjacent à l'ouverture (139).

7. Véhicule selon l'une quelconque des revendications précédentes, dans lequel le dissipateur de chaleur à semi-conducteurs (129) est relié thermiquement au dispositif d'éclairage (115) par un élément flexible (131)thermiquement conducteur.

8. Véhicule selon l'une quelconque des revendications précédentes, dans lequel le dissipateur de chaleur (129) est positionné de telle manière qu'il se trouve au-dessus du dispositif d'éclairage à semi-conducteurs (115) lorsque l'unité d'éclairage (101) se trouve dans son orientation de fonctionnement normale.

9. Véhicule selon l'une quelconque des revendications précédentes, dans lequel le dissipateur de chaleur (129) comprend au moins une formation (143a, 143b, 145) permettant d'améliorer la rigidité en torsion du dissipateur de chaleur.

10. Véhicule selon la revendication 9, dans lequel le dissipateur de chaleur (129) comprend une pluralité de nervures (143a, 143b, 145) qui sont agencées pour augmenter la rigidité en torsion.

11. Véhicule selon l'une quelconque des revendications précédentes, dans lequel le cadre de montage (102) comprend des premier et second éléments de montage (109), dans lequel le premier élément de montage est espacé du second élément de montage et le dissipateur de chaleur (129) est fixé aux premier et second éléments de montage (109).

12. Véhicule selon la revendication 11, dans lequel les premier et second éléments de montage (109) comprennent des premier et second éléments latéraux du cadre de montage (102) lorsque le véhicule se trouve dans son orientation normale.

13. Véhicule selon la revendication 11 ou 12, dans lequel le cadre de montage (102) est agencé sous la forme d'un canal.
